# EUROPÄISCHE PATENTSCHRIFT

(11) **EP 0 674 563 B1**
(45) Veröffentlichungstag und Bekanntmachung des Hinweises auf die Patenterteilung: **02.02.2000**
(21) Anmeldenummer: 94930188.1
(22) Anmeldetag: 18.10.1994
(51) Int. Cl.: B23D 21/00

(54) **VORRICHTUNG ZUM TRENNEN EINER MEHRFACH HOHEN DOSENZARGE**
DEVICE FOR SEPARATING A METAL TUBE INTO SINGLE-CAN LENGTHS
DISPOSITIF SERVANT A DIVISER UN TUBE METALLIQUE EN CORPS INDIVIDUELS DE BOITE DE CONSERVE

(30) Priorität: 19.10.1993 DE 4335580
(43) Veröffentlichungstag der Anmeldung: 04.10.1995
(73) Patentinhaber: Krupp Kunststofftechnik GmbH, 45143 Essen (DE)
(72) Erfinder: LENTZ, Norbert, D-45259 Essen (DE)
(74) Vertreter: John, Ernst, Dipl.-Ing.
(86) Internationale Anmeldenummer: EP9403430
(87) Internationale Veröffentlichungsnummer: WO9511104

(56) Entgegenhaltungen:
- EP-A- 0 164 310
- EP-A- 0 215 384
- FR-A- 2 323 475
- US-A- 3 813 972

## Beschreibung

Die Erfindung betrifft eine Vorrichtung gemäß den Oberbegriffen der Patentansprüche 1 und 6 und wie aus EP-A-0 164 310, bzw. DE-A-3 619 322 bekannt.

Das feststehende Werkzeugteil hat - entsprechend der Bewegungsrichtung der Dosenzarge - ebenfalls eine im wesentlichen kreisbogenförmige Gestalt, wobei am Anfang und am Ende ein derartiger Übergangsbereich vorhanden ist, daß die Dosenzarge im unverformten Zustand mit kreisrundem Querschnitt in die Vorrichtung eintreten und sie - als getrennte Zargen mit entsprechend geringerer Höhe - verlassen kann.

Eine derartige Vorrichtung ist aus der DE 36 19 322 A1 bekannt, wobei das feststehende Werkzeugteil entweder ein durchlaufendes Messer oder eine Nut-und das Gegenwerkzeug entsprechend eine dem Messer zugeordnete Umfangsnut bzw. ein Messer aufweist. Die jeweilige Nut hat dabei nur eine geringe Länge bzw. Höhe. Je nachdem, ob das Messer am feststehenden Werkzeugteil oder am Gegenwerkzeug angeordnet ist, erhalten die Kanten der getrennten Einzelzargen einen nach innen oder nach außen gerichteten Bördel, der sich wiederum nachteilig bis hinderlich beim Bördeln bzw. beim Stauchnecken auswirkt.

Eine Vorrichtung der eingangs genannten Art ist aus der EP-A-0 164 310 bekannt. Bei dieser bekannten Vorrichtung ist über einen ersten Umfangswinkel von etwa 60° ein gegen eine Federkraft nachgiebig gelagertes, äußeres Werkzeugteil und über einen sich anschließenden Umfangswinkel ein fest gelagertes äußeres Werkzeugteil angeordnet. Beide Werkzeugteile weisen an ihrer Innenseite eine um eine gemeinsame Rotations- oder Hochachse angeordnete stufenförmige Trennkannte auf, die mit mindestens einem Gegenwerkzeug mit ebenfalls stufenförmiger Trennkannte zusammenwirken, wobei das mindestens eine Gegenwerkzeug sowohl um die eigene Achse als auch - mit entsprechendem Abstand - um die Rotationsachse der äußeren Werkzeugteile rotierbar ist. Bei der bekannten Vorrichtung dient das erste, elastisch nachgiebige Werkzeugteil zum Anscheren einer Schwächungslinie und das fest angeordnete Werkzeugteil zum vollständigen Durchtrennen der Wand einer mehrfach hohen Dosenzarge.

Die Erfindung betrifft außerdem eine Vorrichtung mit einem feststehenden Werkzeugteil, das mindestens eine um eine Rotationsachse verlaufende Schneidkante aufweist, und mit mindestens einem Gegenwerkzeug, das um seine eigene Achse drehbar und, die Bewegungsbahn der Dosenzargen vorgebend, auf einer Kreisbahn um die Rotationsachse geführt ist, zum Trennen einer mehrfach hohen, vorgeritzten Dosenzarge, wobei die Längsachse der Dosenzarge und die Längsachse des Gegenwerkzeugs parallel zur Rotationsachse ausgerichtet sind. Eine derartige Vorrichtung ist aus der DE 36 19 322 A1 bekannt. Bei dieser bekannten Vorrichtung weist das feststehende Werkzeugteil ein durchlaufendes Messer (alternativ: eine Nut) und das Gegenwerkzeug entsprechend eine dem Messer zugeordnete Umfangsnut (bzw. ein der Nut zugeordnetes Messer) auf. Die jeweilige Nut hat dabei nur eine geringe Länge bzw. Höhe. Je nachdem, ob das Messer am feststehenden Werkzeugteil oder am Gegenwerkzeug angeordnet ist, erhalten die Kanten der getrennten Einzelzargen einen nach innen oder nach außen gerichteten Bördel, der sich wiederum nachteilig bis hinderlich beim Bördeln bzw. beim Stauchnecken auswirkt.

Es ist außerdem eine Vorrichtung zum Trennen mehrfach hoher, vorgeritzter Dosenzargen bekannt, bei der die Zargen von einem umlaufenden Band unter Abrollen bzw. Walken gegen ein in einer Halterung gehaltenes, langgestrecktes Messer von vielen Metern gedrückt werden. Das in einer waagerechten Ebene verlaufende Untertrum des Bandes hat von der Schneidkante des Messers einen Abstand, der kleiner ist als der Durchmesser der unverformten, zu trennenden Dosenzarge. Die Schneide des Messers kann dabei einen in der Höhe periodisch veränderlichen, wellenförmigen Verlauf haben. Nachteilig an dieser Vorrichtung ist der sehr erhebliche Platzbedarf, insbesondere in Längserstreckung. Allein das Messer kann eine Länge von bis zu 8 m aufweisen.

Der vorliegenden Erfindung liegt die Aufgabe zugrunde, eine Vorrichtung der eingangs genannten Art derart zu gestalten, daß mit ihr bei nur geringem Platzbedarf ein böndelfreies, glattes Trennen der mehrfach hohen Zarge in Einzelzargen, d. h., daß die getrennten Einzelzargen eine bördelfreie, glatte Zargenwand aufweisen, weiter verbessert wird.

Diese Aufgabe wird einerseits dadurch gelöst, daß innerhalb des feststehenden Werkzeugteils eine rotierbare Walze angeordnet ist, deren halber Außendurchmesser größer ist als der kleinste Abstand der Trennkante des feststehenden Werkzeugteils von der Rotations- oder Hochachse abzüglich dem Durchmesser der unverformten, zu trennenden Dosenzarge.

Die Anlage zwischen den Werkzeugteilen und dem Blech der Dosenzarge erfolgt - über und unter der Ritzlinie entsprechend entgegengesetzt gerichtet - bis unmittelbar an die vorher eingebrachte Ritzlinie gleichmäßig, so daß das Blech über die durch die Werkzeugteile eingebrachte Scherspannung an der Ritzlinie bördelfrei getrennt wird. Die kreisbogenförmige Ausbildung des feststehenden Werkzeugteils macht lediglich einen geringen Platzbedarf erforderlich und die kreisbogenförmige Bewegungsbahn um eine vorzugsweise senkrechte Rotations- oder Hochachse ermöglicht über Übergabesterne eine gute Übergabe der getrennten, einfach hohen Zargen in weiterverarbeitende Maschinen (z. B. Neckstation, Bördelstation).

Die erzielte Wirkung wird noch wesentlich dadurch gesteigert, daß innerhalb des feststehenden Werkzeugteils eine rotierbare Walze angeordnet ist, deren halber Außendurchmesser größer ist als der kleinste Abstand der Trennkante des feststehenden Werkzeugteils von der Rotations- oder Hochachse abzüglich dem zweifachen Durchmesser der unverformten, zu trennenden Dosenzarge. Durch die angegebenen Abmessungen der Walze ergibt sich beim Umlauf der Dosenzargen zwischen ihr und dem feststehenden Werkzeugteil ein Spalt, der kleiner ist als der Durchmesser der unverformten Dosenzarge. Die Zarge wird - noch innerhalb des elastischen Beanspruchungsbereichs des Blechs seitlich zusammengedrückt und dadurch - unabhängig vom Gegenwerkzeug mit erhöhter Kraft an das feststehende Werkzeugteil angedrückt und an diesem abgewälzt.

Eine gezielte Verbesserung ergibt sich, wenn der Spalt zwischen dem feststehenden Werzeugteil mit der Walze auf die Hälfte bis 5/6, vorzugsweise 2/3, des Durchmessers der unverformten Dosenzarge eingestellt wird.

Zur Verbesserung der Mitnahme der Dosenzargen in Umlaufrichtung ist es vorteilhaft, die Walze mit einer rauhen Umfangsfläche auszubilden.

Eine gute Mitnahme der Dosenzargen entlang des feststehenden Werkzeugteils wird ohne zentrale Walze auch dann erreicht, wenn das Gegenwerkzeug ein dem zurückgezogenen Stufenteil des feststehenden Werkzeugteils zugeordnetes walzenförmiges Teil und ein dem vorstehenden Stufenteil des feststehenden Werkzeugteils zugeordnetes hülsenförmiges Teil aufweist, das im nichtbeanspruchten Zustand durch elastische Elemente koaxial zur Mittelachse des Gegenwerkzeugs gehalten wird und bei seitlicher Belastung entsprechend ausweichen kann, oder wenn das Gegenwerkzeug im in die Dosenzarge ganz eingefahrenen Zustand ein über und unter die stufenförmige Trennkante reichendes hülsenförmiges Außenteil aus elastischem Material aufweist.

Andererseits wird die Aufgabe auch dadurch gelöst, daß das feststehende Werkzeugteil bei einer Vorrichtung nach dem Oberbegriff des Anspruchs 6 ein in einer Halterung angeordnetes Messer aufweist, das die Schneidkante bildet, daß das Gegenwerkzeug ein hülsenförmiges Außenteil aus elastischem Material oder eine Umfangsnut aufweist, wobei die Höhe der Umfangsnut eine Hälfte bis 5/3, vorzugsweise 5/6 bis 4/3, der Höhe einer Einzelzarge nach dem Trennen beträgt und daß innerhalb des Messers ein um die Rotationsachse rotierbares Innenwerkzeug angeordnet ist, dessen Umfangsform an der dem Gegenwerkzeug zugewandten Stelle einen wirksamen Radius aufweist, der größer ist als der auf die Rotationsachse bezogene kleinste Radius der Schneidkante des Messers abzüglich dem Durchmesser der unverformten Dosenzarge.

Obwohl das feststehende Werkzeugteil - wie bei einer der in der DE 36 19 322 A1 beschriebenen Ausführungsformen - als Messer mit Schneide ausgebildet ist und das Gegenwerkzeug bei einer Ausführungsform der Erfindung auch eine Umfangsnut aufweist, in die die Messerschneide eindringen kann, wird die Bördelbildung an der Trennkante erfindungsgemäß dadurch vermieden, daß die Höhe der Nut, gemessen in Richtung der Achse des Gegenwerkzeugs, im angegebenen Verhältnis zur Höhe der Einzelzargen nach dem Trennen steht, wobei bei 3- und 4fach hohen Zargen naturgemäß die niedrigeren Werte des Verhältnisses in Betracht kommen. Die gleiche bördelfreie trennende Wirkung ergibt sich, wenn das Gegenwerkzeug mit einem hülsenförmigen Außenteil aus elastischem Werkstoff versehen ist.

Durch das rotierende Innenwerkzeug mit dem beschriebenen wirksamen Radius werden die noch mehrfach hohen Dosenzargen elastisch gegen das feststehende, äußere Werkzeugteil gedrückt und die Bruch- oder Trennwirkung an der vorgeritzten Stelle verstärkt. Durch das Zusammenwirken des Gegenwerkzeugs und des Innenwerkzeugs kann die Länge der Messerschneide gegenüber der oben genannten lang gestreckten bekannten Form deutlich verkürzt und der Platzbedarf der Vorrichtung so entsprechend reduziert werden.

Die Trennwirkung kann noch dadurch weiter verstärkt werden, daß das Messer mit einem sog. Wellenschliff versehen ist, d. h. daß sich die Höhe der Schneidkante periodisch ändert.

Das Innenwerkzeug kann mit einer zylinderischen Außenfläche gestaltet werden, wobei es vorteilhaft ist, wenn sie als rauhe Fläche ausgebildet ist.

Um die Dosenzargen in der Vorrichtung sicher zu führen, sind dem Gegenwerkzeug bei einer vorteilhaften Weiterbildung der Erfindung Rollenpaare zugeordnet.

Eine Vereinfachung des Aufbaues kann schließlich dadurch erreicht werden, daß das Innenwerkzeug - in Bezug auf die Hoch- oder Rotationsachse - verdrehfest mit dem Gegenwerkzeug verbunden ist und an seinem Umfang eine dem bzw. jedem Gegenwerkzeug zugewandte Ausnehmung oder Aufnahmetasche aufweist, die mit parallel zur Rotationsachse ausgerichteten Rollen versehen ist.

Ausführungsbeispiele der Erfindung sind in der Zeichnung zum Teil stark schematisiert dargestellt und werden im folgenden näher erläutert. Es zeigen:
- Fig. 1: eine Trennvorrichtung für zweifach hohe Zargen im Querschnitt längs der Linie I - I in Fig. 2,
- Fig. 2: die Trennvorrichtung in der Draufsicht,
- Fig. 3: die Trennspindel vor dem Einfahren in die Dosenzarge (Fig. 3 und Position P1 in Fig. 2)
- Fig. 4: die Trennspindel im Übergangsbereich des Einlaufs (Position P2 in Fig. 2),
- Fig. 5: die Trennspindel während des Trennens (Position P3 in Fig. 2),
- Fig. 6: das äußere Scherwerkzeug in einem Querschnitt,
- Fig. 7: eine Trennvorrichtung für dreifach hohe Zargen in einem auszugsweisen Querschnitt,
- Fig. 8: eine Trennvorrichtung in einer anderen Ausführungsform in einer auszugsweisen Draufsicht,
- Fig. 9: die Trennvorrichtung in einem auszugsweisen Querschnitt längs der Linie Linie IX - IX Fig. 8,
- Fig. 10: ein feststehendes Trennmesser mit Wellenschliff in der Draufsicht,
- Fig. 11: eine Trennvorrichtung mit Aufnahmetaschen in einer zentral gelagerten drehbaren Scheibe in der Draufsicht,
- Fig. 12: die Scheibe mit Andrückrollen in einem auszugsweisen Querschnitt und
- Fig. 13: eine Spindel mit einer äußeren Hülse aus elastischem Material in einem auszugsweisen Querschnitt.

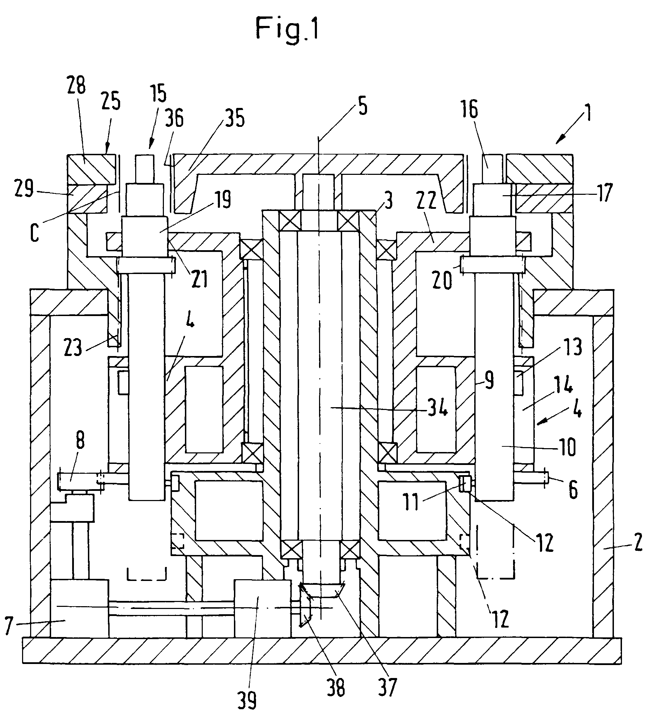

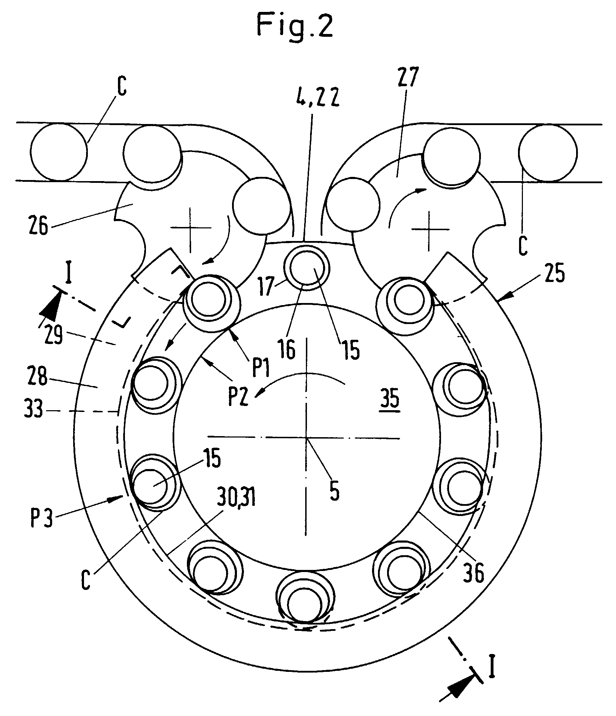

Die Trennvorrichtung 1 in den Fig. 1 und 2 weist ein Maschinengestell 2 mit einer fest darin verankerten hohlen Säule 3 auf. Außen an der Säule 3 ist ein Führungskörper 4 um eine senkrechte Hochachse 5 drehbar gelagert. Der Führungskörper 4 ist unten mit einem Zahnkranz 6 versehen, mit dem ein von einer Antriebseinrichtung 7 antreibbares Ritzel 8 im Eingriff steht.

Der Führungskörper 4 weist eine Vielzahl von parallel zur Hoch- oder Rotationsachse 5 verlaufenden Führungsbohrungen 9 auf, in denen Achsen 10 längs verschieblich geführt sind. Unten an den Achsen sind Steuerrollen 11 gelagert, die in eine fest mit der Säule 3 verbundene Nut 12 eingreifen. Dabei ist die Drehachse der Rollen 11 auf die Hochachse 5 gerichtet. Um dies sicher zu stellen, sind die Achsen 10 mit einem Keil 13 versehen, der in eine entsprechend senkrechte Führungsnut 14 im Führungskõrper 4 eingreift.

Am oberen Ende der Achsen 10 sind vier Scherspindeln 15 mit einem oberen zylinderischen Teil 16 mit kleinem Durchmesser und einem unteren zylinderischen Teil 17 mit größerem Durchmesser angeordnet, wobei das untere zylinderische Teil 17 eine Scherkante 18 bildet. Unter dem Teil 17 schließt sich noch ein zylinderisches Gehäuseteil 19 mit einem Ritzel 20 an. Das Gehäuseteil 19 greift in der in Fig. 1 dargestellten oberen Stellung in eine Ausnehmung 21 in einem oberen Flansch 22 des Führungskõrpers 4 ein, während das Ritzel 20 im Eingriff mit einem am Maschinengestell 2 befestigten Innenzahnkranz 23 kämmt und die Scherspindeln 15 beim Drehen des Führungskörpers 4 ebenfalls in Drehung um die eigene Achse versetzt. Da die Achsen 10 mit den Scherspindeln 15 höhenveränderlich geführt sind, hat der Innenzahnkranz 23 eine entsprechende Höhe.

Um die Scherspindeln 15 herum ist ein am Maschinengestell 2 befestigtes äußeres Scherwerkzeug 25 angeordnet, das vom Einlaufstern 26 bis zum Auslaufstern 27 über etwa 288° am Umfang verläuft. Das äußere Scherwerkzeug 25 weist ein oberes und ein unteres Schersegment 28 bzw. 29 auf. Die untere, innere Kante des oberen Schersegments 28 stellt die Scherkante 30 dar, die durch die innere Umfangsfläche 31 und untere Auflage 32 gebildet wird. Das untere Schersegment 29 weist ebenfalls eine innere Umfangsfläche 33 auf.

Innerhalb der hohlen Säule 3 ist eine Welle 34 gelagert. Auf dieser Welle ist oben eine Walktrommel 35 mit einer im wesentlichen zylinderischen, rauhen Umfangsfläche 36 aufgesetzt. Unten an der Welle 34 ist ein Kegelrad 37 befestigt, das über ein Kegelrad 38 von dem Antrieb 7 angetrieben wird. Um die Umfangsgeschwindigkeit bzw. die Drehzahl der Walktrommel 35 einstellen zu können, ist das Kegelrad 38 über ein Getriebe 39 mit vorzugsweise veränderlicher Übersetzung mit dem Antrieb 7 verbunden.

Bezogen auf die senkrechte Rotations- bzw. Hochachse 5 und die Umlaufbahn der Scherspindeln 15 mit konstantem Radius haben die Innenflächen 31, 33 des äußeren Scherwerkzeugs 25 am Einlauf (Position P1, Fig. 2) zunächst einen so großen Abstand, daß die Dosenzargen C im unverformten kreisrunden Zustand Platz haben. Nach einem Übergangsbereich in Umlaufrichtung der Scherspindeln 15, die das Gegenwerkzeug zu dem äußeren Scherwerkzeug 25 darstellen, stellt sich auch für die Trennkante 30 und die Innenflächen 31, 33 ein konstanter Radius in Bezug auf die Hochachse 5 ein.

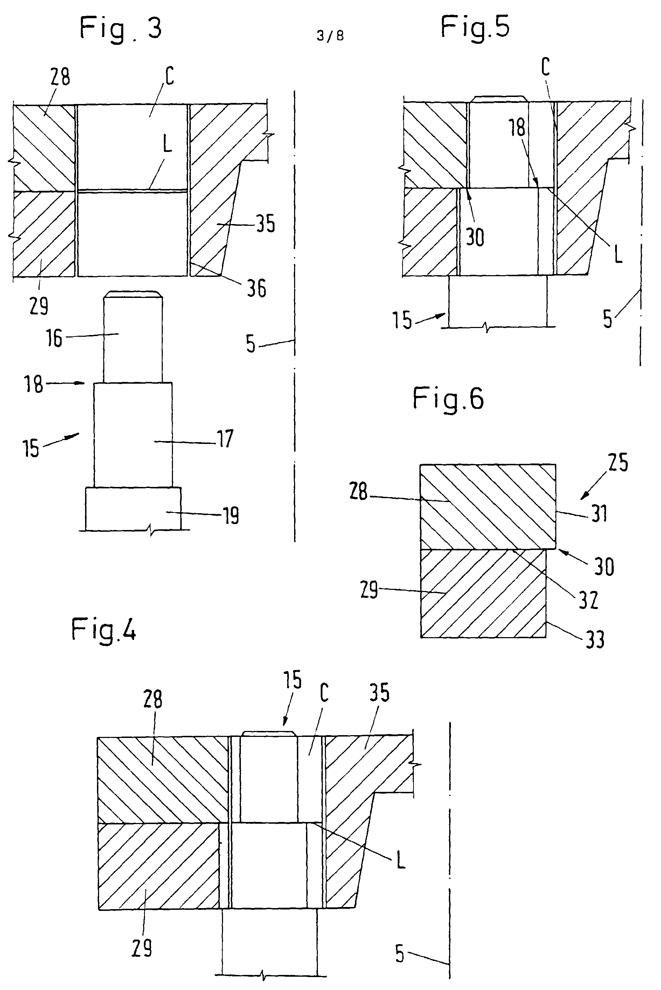

Beim Umlauf des Führungskörpers 4 sind die Scherspindeln 15 - entsprechend dem Verlauf der Steuernut 12 - zwischen dem Auslaufstern 27 und dem Einlaufstern 26 bis unter den Bereich des äußeren, feststehenden Scherwerkzeugs 25 zurückgezogen (vgl. Fig. 3). Im Bereich des Einlaufsterns 26 werden die Scherspindeln 15 nach oben gefahren und gelangen so in das Innere der Dosenzargen C. Die innere Umfangsfläche 31 des äußeren Scherwerkzeugs 25 hat an dieser Stelle von der Umfangsfläche 36 der Walktrommel 35 als Innenwerkzeug einen derartigen Abstand, daß die Dosenzargen C ungehindert Platz haben. Beim Drehen des Führungskörpers 4 werden die Dosenzargen C entsprechend mitgenommen. Die Umfangsfläche 36 der Walktrommel wird etwa mit einer Umfangsgeschwindigkeit bewegt, die im wesentlichen der doppelten Umlaufgeschwindigkeit der Scherspindeln 15 entspricht, so daß die Dosenzargen C von dem Innenwerkzeug, der Walktrommel 35, um die zugeordnete Scherspindel 15 am äußeren Scherwerkzeug 25 abgewälzt werden.

Im Laufe des Umlaufes werden die Dosenzargen C infolge der Verringerung des auf die Hochachse 5 bezogenen Abstandes der Innenflächen 31, 33 zusammengedrückt und dadurch mit erhöhtem Druck zunächst gegen die Innenfläche 31 mit der Scherkante 30 gedrückt. Außerdem verringert sich im Übergangsbereich der relative Abstand zwischen den beiden Scherkanten 18 und 30 des Innenwerkzeugs bzw. des feststehenden Werkzeugteils 25, was zum Bruch der Wand der mehrfach hohen Dosenzarge C an der Solibruchstelle (vorgeritzte Linie L) und damit zum Trennen in einfach hohe Zargen führt.

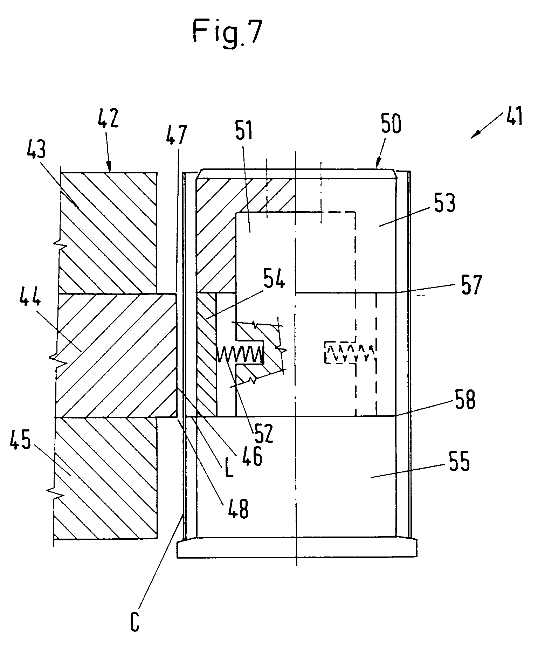

Die Trennvorrichtung 41 gemäß Fig. 7 ist für dreifach hohe Dosenzargen geeignet und weist ein äußeres, feststehendes Scherwerkzeugteil 42 auf. Der Aufbau des Werkzeugteils 42 und der Verlauf der Innenflächen ist entsprechend dem beschriebenen Werkzeug 25. Jedoch ist das Werkzeugteil 42 aus drei übereinander liegenden Segmenten 43...45 zusammengesetzt. Dabei ist die Innenfläche 46 des mittleren Segments 44 etwas mehr nach innen gerichtet als das obere und untere Segment 43 bzw. 45. Durch diese Anordnung sind dem mittleren Segment 44 zwei Scherkanten 47, 48 zugeordnet.

Die zugeordneten Scherspindeln 50 weisen - den Segmenten 43, 45, 44 jeweils entsprechend - einen oberen und unteren festen zylinderischen Teil 53, 55 auf, zwischen denen eine zylinderische Hülse 54 mit gleichem Außendurchmesser angeordnet ist. Die Hülse 54 wird von in einem mittigen Kern 51 gehaltenen Federn 52 im Ruhezustand koaxial mit den zylinderischen Teilen 53, 55 gehalten. Die Spindeln 50 sind als Gegenwerkzeug zum feststehenden Werkzeugteil 42 wie bei dem Ausführungsbeispiel gemäß den Fig. 1 bis 6 ebenfalls in einem Führungskõrper hähenveränderlich und drehbar gelagert.

Nimmt der auf die Hochachse 5 bezogene Abstand der inneren Flächen 46 im Übergangsbereich ab, so drückt die Scherspindel 50 die Dosenzarge C zunächst an die Innenfläche 46. Bei weiterer Radiusverminderung der Innenfläche 46 wird die Zarge durch das Zusammenwirken der Scherkanten 47, 48 mit den entsprechenden Scherkanten 57, 58 der Spindel 50 an den vorgeritzten Stellen getrennt, so daß drei einfach hohe Zargen entstehen. Dabei sorgt die gefederte Hülse 54 für ein einwandfreies Abrollen der Zarge während des Trennens.

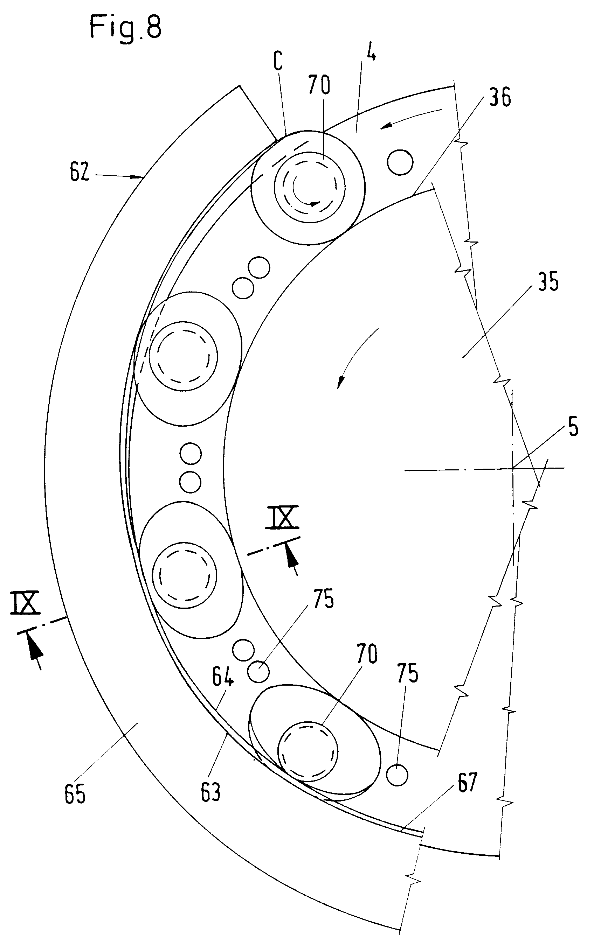

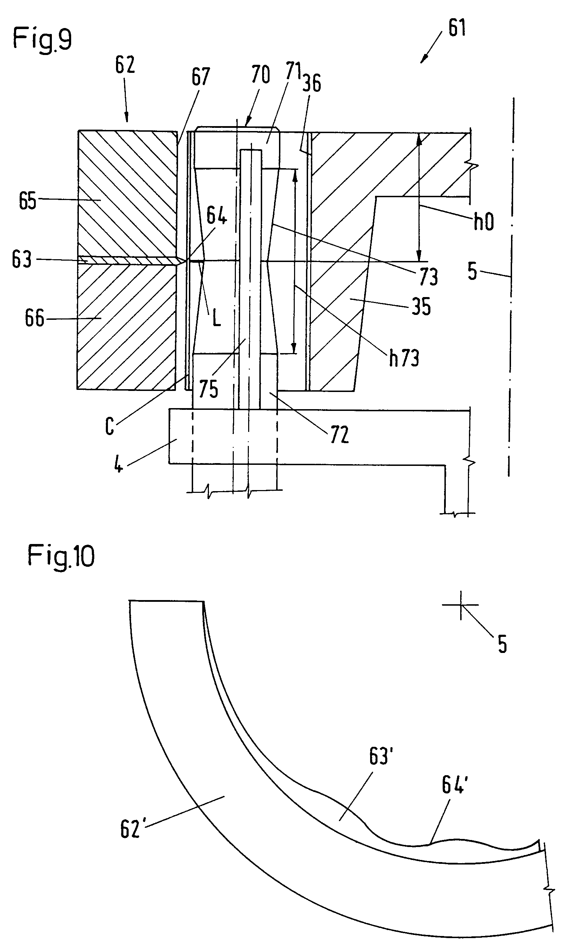

Bei der Trennvorrichtung gemäß den Fig. 8 und 9 für doppelt hohe Zargen weist das feststehende äußere Werkzeugteil 62 ein Messer 63 mit einer der Hochachse 5 zugewandten Schneide 64 auf. Das Messer wird von je einem oberen und unteren Segment 65, 66 gehalten. Diese Segmente weisen - im Querschnitt (vgl. Fig. 9) gesehen - senkrechte Innenwände 67 auf. Die Trennvorrichtung 61 weist ferner - analog dem Ausführungsbeispiel gemäß den Fig. 1 und 2 - eine um die Hochachse 5 drehbare Walktrommel 35 mit Umfangsfläche 36 und in einem ebenfalls um die Hochachse 5 rotierbaren Führungskõrper 4 gehaltene Spindeln 70 als Gegenwerkzeug zum feststehenden Werkzeugteil 62 auf. Der Antrieb der Spindeln 70 um die eigene Achse erfolgt in der anhand der Fig. 1 und 2 beschriebenen Weise.

Die Innenwände 67 der Segmente 65, 66 verringern ihren Abstand zur Hochachse 5 im Übergangsbereich vom Einlauf aus in bereits beschriebener Weise bis zu einem kleinsten Wert. Daraus ergibt sich wiederum eine Abnahme des relativen Abstands zwischen den Innenwänden 67 (und der Schneide 64) in Bezug auf die Spindel 70.

Die Spindeln 70 weisen an ihrem oberen und unteren Ende je ein zylinderisches Teil 71, 72 auf, zwischen denen eine hohe, mittige Nut 73 angeordnet ist. Im dargestellten Beispiel beträgt die Höhe h73 dieser Nut 10/7 oder das 1,43fache der Höhe h0 einer einfach hohen Zarge nach dem Trennen. Die doppelt hohe, vorgeritzte Zarge C wird im Laufe ihres eigenen Vorschubs, d. h. bei abnehmendem Abstand zwischen dem feststehenden, äußeren Werkzeugteil 62 und der zugeordneten Spindel 70 von den beiden verhältnismäßig weit voneinander angeordneten zylinderischen Teilen 71, 72 gegen die Schneidkante 64 gedrückt, so daß es zu keinerlei Bördelbildung an den Zargen kommt. Wenn der - in der senkrechten Projektion gesehen - Abstand zwischen der Schneide 64 und den zylinderischen Teilen 71, 72 entsprechend klein oder sogar negativ ist, kommt es zum Bruch der vorgeritzten Linie L. Bei einem dreifach hohen Trennwerkzeug mit entsprechend zwei Trennmessern ist der mittlere zylinderische Abschnitt naturgemäß mittig zwischen den beiden Trennmessern angeordnet.

Zur Führung der Zarge C während des Umlaufs sind jeder Spindel 70 zwei auf dem Führungskörper 4 gelagerte Führungsrollen 75 zugeordnet.

Das in Fig. 10 dargestellte feststehende Werkzeugteil 62' weist ein Messer 63' mit Wellenschliff auf, d. h. die Schneide 64' ist mit einem in der Höhe sich periodisch veränderlichen Profil ausgebildet. Beim Abwälzen der Zargen C durch die Spindeln 70 wird dadurch eine das Trennen der doppelt hohen Zarge in Einzelzargen fördernde Impulswirkung erzeugt.

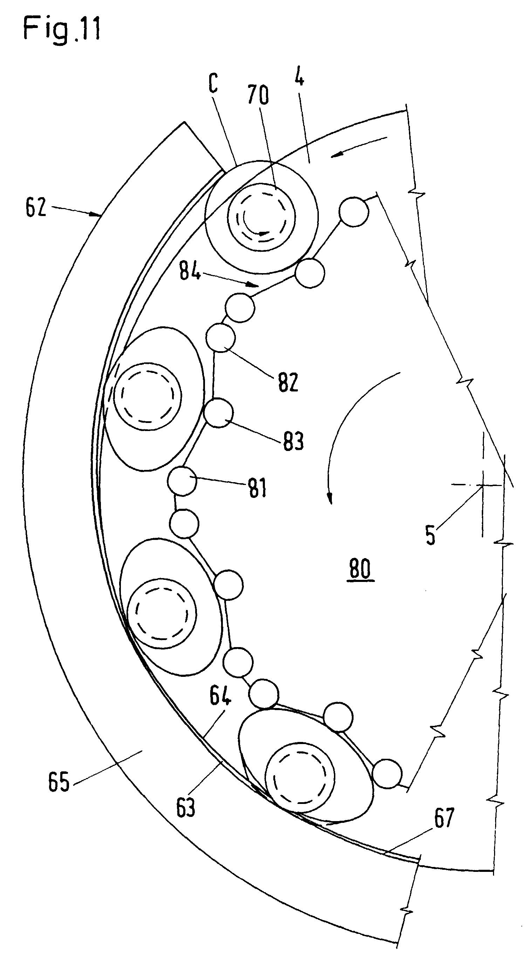

Bei dem in Fig. 11 dargestellten Ausführungsbeispiel ist an die Stelle der Walktrommel eine Scheibe 80 getreten, die mit der gleichen Drehzahl um die Hochachse 5 angetrieben wird wie der Führungskörper 4 mit den Spindeln 70, was zu einer erheblichen konstruktiven, insbesondere getriebetechnischen Vereinfachung führt. Dabei sind jeder Spindel 70 drei in der Scheibe 80 gelagerte Rollen 81, 82, 83 zugeordnet, deren Drehachsen parallel zur Hochachse 5 ausgerichtet sind. Jeweils zwei Rollen - 81, 82 - sind in gleicher Entfernung zur Hochachse 5 angeordnet, die dritte - 83 - ist demgegenüber zurückversetzt, so daß für jede Zarge C eine Aufnahmetasche 84 entsteht. Den Rollen 81...83 fällt die Aufgabe zu, die Zargen bei ihrem Vorschub gegen das feststehende Trennwerkzeug 62 zu drücken.

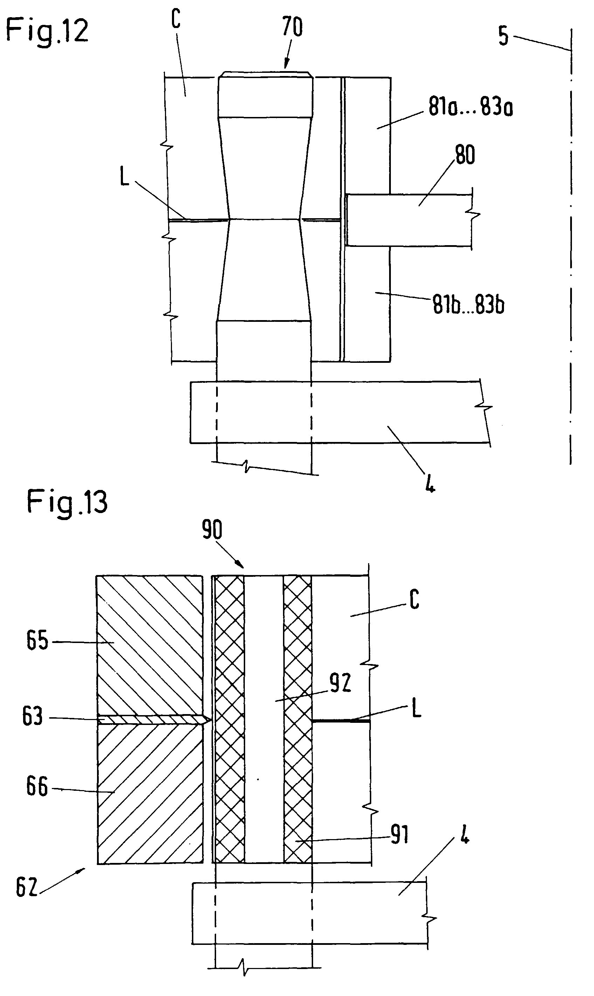

Die Rollen 81...83 können auch in doppelter Besetzung oben und unten an der Scheibe 80 gelagert sein (vgl. Bezugszeichen 81a...83a und 81b...83b in Figur 12).

Bei dem Ausführungsbeispiel gemäß Figur 13 ist die Spindel 90 mit einer Hülse 91 aus einem elastischen Werkstoff, z.B. Polyurethan (PUR), versehen, die von einem zylinderischen Kern 92 getragen wird. Beim Andrücken der Wand der Dosenzarge C gegen das Messer 63 wird die notwendige Kraft über eine verhältnismäßig große Fläche der Hülse 91 verteilt, so daß es wiederum zu keiner Bördelbildung kommt.

## Patentansprüche

1. Vorrichtung (1) zum Trennen einer mehrfach hohen, vorgeritzten Dosenzarge,
mit einem feststehenden Werkzeugteil (25; 42), das mindestens eine um eine Rotationsachse (5) verlaufende Trennkante (30; 47, 48) aufweist,
und mit mindestens einem Gegenwerkzeug (15; 50), das um seine eigene Achse drehbar und, die Bewegungsbahn der Dosenzargen (C) vorgebend, auf einer Kreisbahn um die Rotationsachse (5) geführt ist,
wobei die Längsachse der Dosenzarge (C) und die Längsachse des Gegenwerkzeugs (15; 50) parallel zur Rotationsachse (5) ausgerichtet sind,
die Trennkante (30; 47, 48) des feststehenden Werkzeugteils (25; 42) durch eine senkrecht zur Rotationsachse (5) abgesetzte Stufenform gebildet ist
und das Gegenwerkzeug (15; 50) eine dem feststehenden Werkzeugteil (25; 42) entsprechend ausgebildete oder - durch elastische Elemente (52) - entsprechend ausbildbare Form mit einer Trennkante (18; 57, 58) aufweist,
**dadurch gekennzeichne**t, daß innerhalb des festehenden Werkzeugteils (25; 42) eine rotierbare Walze (35) angeordnet ist, deren halber Außendurchmesser größer ist als der kleinste Abstand der Trennkante (30; 47, 48) des festehenden Werkzeugteils (25; 42) von der Rotationsachse (5) abzüglich dem Durchmesser der unverformten, zu trennenden Dosenzarge (C).

2. Vorrichtung nach Anspruch 1, dadurch gekennzeichnet, daß der halbe Außendurchmesser der Walze (35) gleich dem auf die Rotationsachse (5) bezogenen kleinsten Radius der Trennkante (30; 47, 48) abzüglich der Hälfte bis fünf Sechsteln, vorzugsweise zwei Dritteln, des Durchmessers der unverformten Dosenzarge (C) beträgt.

3. Vorrichtung nach Anspruch 1 oder 2, dadurch gekennzeichnet, daß die Walze (35) eine rauhe Umfangsfläche (36) aufweist.

4. Vorrichtung nach Anspruch 1, dadurch gekennzeichnet, daß das Gegenwerkzeug (50) ein dem zurückgezogenen Stufenteil (43, 45) des feststehenden Werkzeugteils (42) zugeordnetes walzenförmiges Teil (53, 55) und ein dem vorstehenden Stufenteil (44) des feststehenden Werkzeugteils zugeordnetes hülsenförmiges Teil (54) aufweist, das im nicht beanspruchten Zustand durch elastische Elemente (52) koaxial zur Mittelachse der walzenförmigen Teile (52, 55) gehalten wird und bei seitlicher Belastung entsprechend ausweichen kann.

5. Vorrichtung nach Anspruch 1, dadurch gekennzeichnet, daß das Gegenwerkzeug (90) im in die Dosenzarge (C) ganz eingefahrenen Zustand ein über und unter die stufenförmige Tennkante reichendes hülsenförmiges Außenteil (91) aus elastischem Material aufweist.

6. Vorrichtung (61) zum Trennen einer mehrfach hohen, vorgeritzten Dosenzarge,
mit einem feststehenden Werkzeugteil (62), das mindestens eine um eine Rotationsachse (5) verlaufende Schneidkante (64, 64') aufweist, und mit mindestens einem Gegenwerkzeug (70; 90), das um seine eigene Achse drehbar und, die Bewegungsbahn der Dosenzargen (C) vorgebend, auf einer Kreisbahn um die Rotationsachse (5) geführt ist,
wobei die Längsachse der Dosenzarge (C) und die Längsachse des Gegenwerkzeugs (70; 90) parallel zur Rotationsachse (5) ausgerichtet sind,
**dadurch gekennzeichnet**,
daß das feststehende Werkzeugteil (62) ein in einer Halterung (65, 66) angeordnetes Messer (63, 63') aufweist, das die Schneidkante (64, 64') bildet,
daß das Gegenwerkzeug (70) ein hülsenförmiges Außenteil (91) aus elastischem Material oder eine Umfangsnut (73) aufweist, wobei die Höhe der Umfangsnut (73) eine Hälfte bis fünf Drittel, vorzugsweise fünf Sechstel bis vier Drittel, der Höhe einer Einzelzarge nach dem Trennen beträgt
und daß innerhalb des Messers (63, 63') ein um die Rotationsachse (5) des Gegenwerkkzeugs (70) rotierbares Innenwerkzeug (35) angeordnet ist, dessen Umfangsform an der dem Gegenwerkzeug (70) zugewandten Stelle einen wirksamen Radius aufweist, der größer als der auf die Rotationsachse (5) bezogene kleinste Radius der Schneidkante (64) abzüglich dem Durchmesser der unverformten Dosenzarge (C) ist.

7. Vorrichtung nach Anspruch 6, dadurch gekennzeichnet, daß das Messer (63') eine in der Höhe periodisch veränderliche Schneidkante (64') aufweist.

8. Vorrichtung nach Anspruch 6 oder 7, dadurch gekennzeichnet, daß das Innenwerkzeug (35) eine zylinderische Außenfläche (36) aufweist.

9. Vorrichtung nach Anspruch 8, dadurch gekennzeichnet, daß die Außenfläche (36) eine rauhe Oberfläche besitzt.

10. Vorrichtung nach Anspruch 7 oder 9, dadurch gekennzeichnet, daß dem Gegenwerkzeug (70) ein Rollenpaar (75) zum Führen der Dosenzarge (C) zugeordnet ist.

11. Vorrichtung nach Anspruch 6 oder 7, dadurch gekennzeichnet, daß das Innenwerkzeug (80) - in Bezug auf die Rotationsachse (5) - mit dem Führungskörper (4) des Gegenwerkzeugs (70) verbunden ist und an seinem Umfang eine dem bzw. jedem Gegenwerkzeug (70) zugewandte Ausnehmung (84) aufweist, die mit parallel zur Rotationsachse (5) ausgerichteten Rollen (81...83; 81a...83a, 81b...83b) versehen ist.

## Claims

1. Device (1) for parting a multiple-high, pre-scored can body
comprising a fixed tool part (25, 42) provided with at least one parting edge (30; 47, 48) running about a rotation axis (5)
and at least one counter tool (15; 50) being rotatable about ist own axis and, determing the moving path of the can bodies (*C*), being guided on a circumferential path about the rotation axis (5),
whereby the longitudinal axis of the can body (*C*) and the longitudinal axis of the counter tool (15; 50) are aligned parallel to the rotation axis (5),
whereby the parting edge (30; 47, 48) of the fixed tool part (25; 42) is formed by a step configuration recessed rectangularly in respect of the rotation axis (5)
and whereby the counter tool (15; 50) has a form with a parting edge (18; 57, 58) shaped or - by means of resiliant elements (52) - being able to be shaped according to the fixed tool part (25; 42),
**characterised** in that a rotatable drum (35) is arranged within the fixed tool part (25; 42), the half of its outer diameter is greater than the smalest distance of the parting edge (30; 47, 48) of the fixed tool part (25; 42) from the rotation axis (5) less the diameter of the unformed and still to be parted can body (*C*).

2. Device according to Claim 1, characterised in that half of the outer diameter of the drum (35) is equal to the smalest radius of the parting edge (30; 47, 48) related to the rotation axis (5) less the half to five sixths, preferably two thirds, of the diameter of the unformed can body (*C*).

3. Device according to Claim 1 or 2, characterised in that the drum (35) is eqipped with a rough circumferential surface (36).

4. Device according to Claim 1, characterised in that the counter tool (50) has a drum like part (53, 55) assigned to the retracted step part (43, 45) and a sleeve like part (54) assigned to the protruding step part (44) of the fixed tool part, the sleeve like part (54) being held coaxially to the centre line of the drum like parts (53, 55) by resiliant elements (52) in idle stage and being able to yield aside under lateral load.

5. Device according to Claim 1, characterised in that the counter tool (90) when it is completely penetrated into the can body (*C*) has a sleeve like outer part (91) of resiliant material extending above and beneath the step like parting edge.

6. Device (61) for parting a multiple-high, pre-scored can body
comprising a fixed tool part (62) provided with at least one cutting edge (64, 64') running about a rotation axis (5)
and at least one counter tool (70; 90) being rotatable about ist own axis and, determing the moving path of the can bodies (*C*), being guided about the rotation axis (5),
whereby the longitudinal axis of the can body (*C*) and the longitudinal axis of the counter tool (70; 90) are aligned parallel to the rotation axis (5),
**characterised** in that fixed tool part (62) is equipped with a knife (63, 63') constituting the culling edge (64, 64') and being arranged in a holder (65, 66),
in that the counter tool (70) is provided with a sleeve like outer part (91) of resiliant material or with a circumferential groove (73), the hight of the circumferential groove (73) being one half to five thirds, preferably five sixths to four thirds of the hight of a single can body after being parted and in that an inner tool (35) rotatable about the rotation axis (5) of the counter tool (70) is arranged within the knife (63, 63'), the circumferential shap of the inner tool having an effective radius at the position facing the counter tool (70), the effective radius being graeter than the smalest radius - related to the rotation axis (5) - of the cutting edge (64) less the diameter of the unformed can body (*C*).

7. Device according to Claim 6, characterised in that the knife (63') has a cutting edge (64') varying periodically in hight.

8. Device according to Claim 6 or 7, characterised in that the inner tool (35) is equipped with a cylindrical outer surface (36).

9. Device according to Claim 8, characterised in that the outer surface (36) is equipped with a rough surface.

10. Device according to Claim 7 or 9, characterised in that a roller pair (75) is assigned to the counter tool (70) to guide the can body (*C*).

11. Device according to Claim 6 or 7, characterised in that the inner tool (80) is - related to the rotation axis (5) - connected to the guide body (4) of the counter tool (70) and has a recess (84) at its circumference, the recess (84) facing the or, respectively, any counter tool (70) and being equipped with rollers (81...83; 81a...83a; 81b...83b) aligned parallel to the rotation axis (5).

## Revendications

1. Dispositif (1) servant à diviser un tube métallique préincisé en corps individuels de boîte de conserve,
avec une partie d'outil fixe (25; 42) possédant au moins une arête de tronçonnage (30; 47, 48) disposée autour d'un axe de rotation (5),
et avec au moins un contre-outil (15; 50) pouvant tourner autour de son propre axe et guidé sur un trajet circulaire autour de l'axe de rotation (5), définissant ainsi la voie de dèfilement des tubes métalliques (C),
l'axe longitudinal du tube métallique (C) et l'axe longitudinal du contre-outil (15; 50) étant parallèles à l'axe de rotation (5),
l'arête de tronçonnage (30; 47, 48) de ta partie d'outil fixe (25; 42) étant formée par un gradin en saillie perpendiculaire à l'axe de rotation (5) et le contre-outil (15; 50) disposant d'une arête de tronçonnage (18; 57, 58) dont la forme est réalisée en fonction de la partie d'outil fixe (25; 42) ou réalisable en conséquence par des éléments élastiques (52),
caractérisé en ce
qu'au sein de la partie d'outil fixe (25; 42) est disposé un cylindre rotatif (35) dont le demi-diamètre extérieur est supérieur au plus petit écart entre l'arête de tronçonnage (30; 47, 48) de la partie d'outil fixe (25; 42) et l'axe de rotation (5) moins le diamètre du tube métallique (C) non transformé et à tronçonner.

2. Dispositif selon la revendication 1, caractérisé en ce que le demi-diamètre extérieur du cylindre (35) est égal au plus petit rayon de l'arête de tronçonnage (30; 47, 48) par rapport à l'axe de rotation (5) moins la moitié à cinq sixièmes, de préférence deux tiers, du diamètre du tube métallique (C) non transformé.

3. Dispositif selon la revendication 1 ou 2, caractérisé en ce que le cylindre (35) possède une surface circonférentielle rugueuse.

4. Dispositif selon la revendication 1, caractérisé en ce que le contre-outil (50) dispose d'une partie de forme cylindrique (53, 55) opposée à la partie étagée en retrait (43, 45) de la partie d'outil fixe (42) ainsi que d'une partie en forme de douille (54) opposée à la partie étagée en saillie (44) de la partie d'outil fixe, maintenue en place par des éléments élastiques (52) dans le sens coaxial par rapport à l'axe médian des pièces de forme cylindrique (52, 55) à l'état non sollicité et pouvant s'effacer en cas de sollicitation latérale.

5. Dispositif selon la revendication 1, caractérisé en ce que le contre-outil (90), à l'état entièrement rentré dans le tube métallique (C), dispose d'une partie extérieure en forme de douille (91) exécutée en un matériau élastique et s'étendant au-dessus et en dessous de l'arête de tronçonnage étagée.

6. Dispositif (61) servant à diviser un tube métallique préincisé en corps individuels de boîte de conserve,
avec une partie d'outil fixe (62) possédant au moins une arête de coupe (64, 64') disposée autour d'un axe de rotation (5),
et avec au moins un contre-outil (70; 90) pouvant tourner autour de son propre axe et guidé sur un trajet circulaire autour de l'axe de rotation (5), définissant ainsi la voie de défilement des tubes métalliques (C),
l'axe longitudinal du tube métallique (C) et l'axe longitudinal du contre-outil (70; 90) étant parallèles à l'axe de rotation (5),
caractérisé en ce que
la partie d'outil fixe (62) possède une lame (63, 63') disposée dans une fixation (65, 66) et formant l'arête de coupe (64, 64'),
en ce que le contre-outil (70) dispose d'une partie extérieure en forme de douille (91) en un matériau élastique ou d'une rainure circonférentielle (73), la hauteur de la rainure circonférentielle (73) comportant la moitié à cinq tiers, de préférence cinq sixièmes à quatre tiers de la hauteur d'un corps de boîte individuel après le tronçonnage,
et en ce qu'au sein de la lame (63, 63') est disposé un outil intérieur (35) pouvant tourner autour de l'axe de rotation (5) du contre-outil (70) et dont la forme circonférentielle possède un rayon efficace à l'endroit faisant face au contre-outil (70) qui est supérieur au plus petit rayon de l'arête de coupe (64) par rapport à l'axe de rotation (5) moins le diamètre du tube métallique (C) non transformé.

7. Dispositif selon la revendication 6, caractérisé en ce que la lame (63') dispose d'une arête de coupe (64') variant périodiquement en hauteur.

8. Dispositif selon la revendication 6 ou 7, caractérisé en ce que l'outil intérieur (35) dispose d'une surface extérieure (36) cylindrique.

9. Dispositif selon la revendication 8, caractérisé en ce que la surface extérieure (36) est rugueuse.

10. Dispositif selon la revendication 7 ou 9, caractérisé en ce qu'une paire de galets (75) est affectée au contre-outil (70) pour assurer le guidage du tube métallique (C).

11. Dispositif selon la revendication 6 ou 7, caractérisé en ce que - par rapport à l'axe de rotation (5) - l'outil intérieur (80) est solidaire du corps de guidage (4) du contre-outil (70) et dispose sur toute sa circonférence d'un creux (84) opposé au ou à chaque contre-outil (70) et muni de galets (81...83 ; 81a...83a, 81b...83b) alignés parallèlement à l'axe de rotation (5).
